# EUROPÄISCHE PATENTSCHRIFT

(11) **EP 1 851 063 B1**
(45) Veröffentlichungstag und Bekanntmachung des Hinweises auf die Patenterteilung: **30.04.2014**
(21) Anmeldenummer: 06706487.3
(22) Anmeldetag: 30.01.2006
(51) Int. Cl.: B41M 5/00, B41M 5/52

(54) **VORBEHANDLUNG UND/ODER VORBESCHICHTUNG VON NICHT SAUGFÄHIGEN SUBSTRATEN UND/ODER NICHT SAUGFÄHIGEN TRÄGERMATERIALIEN**
PRE-TREATMENT AND/OR PRE-COATING OF NON-ADSORBENT SUBSTRATES AND/OR NON-ADSORBENT SUPPORT MATERIALS
PRETRAITEMENT ET/OU PRE-ENDUCTION DE SUBSTRATS NON ABSORBANTS ET/OU DE SUPPORTS NON ABSORBANTS

(30) Priorität: 17.02.2005 DE 102005007502
(43) Veröffentlichungstag der Anmeldung: 07.11.2007
(73) Patentinhaber: Tritron GmbH, 35088 Battenberg-Dodenau (DE)
(72) Erfinder: SIMON, Jens, 35116 Hatzfeld (DE)
(74) Vertreter: Ullrich & Naumann
(86) Internationale Anmeldenummer: PCT/EP2006/000781
(87) Internationale Veröffentlichungsnummer: WO 2006/087087

(56) Entgegenhaltungen:
- EP-A- 0 273 583
- EP-A- 0 480 362
- EP-A- 0 779 347
- DE-A1- 10 204 143
- US-A- 3 860 547
- US-A- 4 260 531
- US-A- 5 889 083
- US-A- 5 958 169
- US-A- 5 973 062
- US-B1- 6 498 202

## Beschreibung

Die vorliegende Erfindung betrifft eine Vorbehandlung und/oder Vorbeschichtung von nicht saugfähigen Substraten und/oder nicht saugfähigen Trägermaterialien für den Tintendruck, Tintenstrahldruck mit wasserbasierter Tinte mit einer Vorbehandlungslösung und/oder Beschichtung.

Heutzutage werden niedrigviskose Druckfarben für Tintendruck, Tintenstrahldruck verwendet, die im wesentlichen als wasserbasierende Druckfarben aufgebaut sind. Deren Verlauf wird durch die Beschaffenheit des Substrates bzw. des Trägermaterials gesteuert. Dabei ist häufig nachteilig, dass die Druckfarbe bzw. Tinte bei sich ändernden Substraten und Trägermaterialen, bei sich ändernden Druckgeschwindigkeiten und bei sich ändernden Zusammensetzungen der Tinte unterschiedlich verläuft oder verfliesst und die Beschriftung verwischt, nicht hinreichend haftet und das Schriftbild bzw. der Aufdruck durch das Fliessverhalten unscharf wird. Der herkömmliche Tintenstrahldruck ist eine berührungslose Form eines digitalen Druckes, bei dem Druckfarben in einzelnen Volumeneinheiten, bzw. Tropfen zerlegt, zeit- und ortsabhängig auf ein beliebiges Substrat bzw. Trägermaterial appliziert werden,

Der Tintenstrahldruck umfasst auch unter anderem den kontinuierlich arbeitenden Tintenstrahldruck (Continuous Ink Jet, CIJ), den diskontinuierlich arbeitenden, thermisch oder piezoelektrisch aktivierten Tintendruck (Drop on Demand, DoD), sowie elektronisch gesteuerte Aufsprühtechniken, wie beispielsweise Air Brush.

Für den Farbstrahldruck werden in Abhängigkeit vom Farbordnungssystem verschiedenfarbige Druckfarben innerhalb eines Rasters nebeneinander gedruckt, wobei das Raster die Auflösung des Druckes bestimmt. Dabei verläuft die auf das Substrat oder das Trägermaterial aufgedruckte Tinte in Abhängigkeit von der sich zwischen der aufgebrachten Tinte und dem Trägermaterial ausgebildeten Grenzflächenspannung sowie in Abhängigkeit von der Struktur des Trägermaterials bzw. Substrates selbst. Die Verlaufgeschwindigkeit wird durch die Fliessfähigkeit der aufgedruckten Tinte im Fortgang der Filmbildung bestimmt.

Der Verlauf der Tinte bzw. Druckfarbe seinerseits bestimmt den Flächendeckungsgrad und die Farbverteilung, so dass die Tinte das Substrat bzw. das Trägermaterial im Sinne eines hohen Flächendeckungsgrades möglichst vollflächig benetzt und sich im Sinne einer homogenen Farbverteilung möglichst gleichmässig verteilt, ohne im Sinne einer definierten Farbverteilung ineinander zu laufen und sich zu vermischen, was unerwünscht ist.

Niedrigviskose Tinten für den Tintenstrahldruck, deren Filmbildung zeitlich von der Lösungsmittelverdunstung bestimmt ist, machen im Sinne einer guten Druckqualität eine Steuerung der für den Verlauf der Tinte massgeblichen Einflussgrössen, wie Grenzflächenspannung und Fliessfähigkeit notwendig. Diese Steuerung ist unzureichend gelöst.

Die Druckqualität wird im Sinne einer geeigneten Grenzflächenspannung herkömmlich durch eine chemische Vorbehandlung (Reinigen, Beizen, Chromatieren, Phosphatieren, Entlacken, Oxyfluorierung), eine physikalische Vorbehandlung (Beflammung, Coronna-Entladung, Plamabehandlung) oder eine dauerhafte Beschichtung oder VorbeSchichtung gesteuert, die im Sinne eines hohen Flächendeckungsgrades und einer homogenen Farbverteilung eine benetzende Grenzflächenspannung sicherstellt. Die herkömmlichen Verfahren zur Steuerung der Grenzflächenspannung sind nicht universell einsetzbar sondern in hohem Mass substratspezifisch.

Andererseits wir die Druckqualität im Sinne eines geeigneten Verlaufsverhaltens herkömmlich dadurch gesteuert, dass die Abnahme der Fliessfähigkeit der applizierten, niedrigviskosen Druckfarbe im Fortgang der Filmbildung physikalisch (Wärmetrocknung, Konvektionstrocknung) oder photophysikalisch (UV-Trocknung) beschleunigt wird, um ein ineinander Laufen und Vermischen der Tinte im Sinne einer definierten Farbverteilung zu verhindern. Damit ist in der Regel ein hoher technischer Aufwand verbunden.

DE 102 04 143 A1 offenbart Farbaufnahmeschichten und absorbierte Tinten. Die Formulierungen der Farbaufnahmeschichten und der Tinten sind derart auf einander abgestimmt, dass es zu einer chemischen Vernetzung der Farbaufnahmeschichten und der Tinte kommt. DE 102 04 143 A1 betrifft somit eine Vorbehandlung in Form einer dauerhaften absorbierenden Schicht, die chemisch mit der Tinte vernetzt.

EP 0 480 362 A betrifft ein Stärke enthaltendes Beschichtungsmittel, welches als absorbierende Vorbehandlung noch nicht saugfähigen Substraten dient. Durch diese Vorbehandlung wird eine Absorptionsschicht erzeugt, die darauf aufgebrachte Tinte ansaugt und absorbiert.

Aufgabe der Erfindung ist, universell einsetzbare Vorbehandlungen oder Vorbeschichtungen für nicht saugende Substrate oder Trägermaterialien wie Kunststoffe, Metalle und Glas zu schaffen, die, falls erforderlich, im Sinne eines hohen Flächendeckungsgrades und einer homogenen Farbverteilung benetzende Grenzflächenspannungen sicherstellen, und Tinten zu schaffen, die auf solchen Vorbehandlungen oder Vorbeschichtungen aufgebracht im Sinne einer definierten Farbverteilung ein ineinander Laufen oder Vermischen der applizierten Volumeneinheiten unterbinden. Mit diesen Vorbehandlungen oder Vorbeschichtungen soll eine genaue Steuerung der Fliesfähigkeit der Tinten, der Filmbildung, der Pigmentbeweglichkeit und, falls erforderlich, der Grenzflächenspannung ohne hohen technischen Aufwand universell möglich sein.

Zur Lösung dieser Aufgabe führen die Merkmale des Kennzeichens des Anspruches 1.

Erfindungsgemäß ist erkannt worden, dass nicht saugfähige Substrate mit Tinte bedruckbar sind, wenn sie mit einem Initiator vorbehandelt sind. In erfindungsgemäßer Weise vermindert der Initiator physikalisch, chemisch durch Reduzierung der Löslichkeit zumindest eines Tintenbestandteils die Fließfähigkeit der auf das Substrat aufgebrachten Tinte.

Entgegen dem genannten Stand der Technik ist somit nicht eine dauerhaft absorbierende, mit Tinte vernetzende Schicht vorgesehen. Vielmehr wird das nicht saugfähige Substrat durch eine nicht notwendigerweise Farbe aufnehmende Schicht einer Chemikalie, die eine Veränderung der Fließfähigkeit der Tinte bewirkt, vorbehandelt. Diese Schicht muss nicht notwendigerweise mit der Tinte vernetzen. Bei dem Initiator kann es sich somit um eine temporäre oder eine permanente Chemikalie handeln.

Die beanspruchte Lehre betrifft somit einen Initiator, der aktiv die Fließfähigkeit der Tinte ändert. Der Initiator ist jedoch nicht notwendigerweise in einer die Tinte absorbierenden Schicht bzw. Vorbeschichtung gebunden. Des Weiteren muss der Initiator selbst keine Absorptionseigenschaften aufweisen.

Bei der vorliegenden Erfindung hat sich als besonders vorteilhaft erwiesen, eine temporäre oder permanente Vorbeschichtung, insbesondere eine Beschichtung auf ein nicht saugfähiges Substrat oder Trägermaterial vor dem Aufbringen der Tinte aufzubringen, welche geeignet ist, die Fliessfähigkeit der aufgebrachten Tinte beispielsweise ausgelöst durch Flockulierung oder Agglomerisierung ausreichend zu vermindern und/oder ein Aushärten bzw. eine Polymerisation der applizierten Tinte auszulösen.

Ferner sollen die in der Tinte enthaltenen farbgebenden Farbmittel auf der Beschichtung bzw. auf dem Trägermaterial oder Substrat dauerhaft fixiert werden.

Es hat sich als besonders vorteilhaft erwiesen, eine Beschichtung zu wählen, welche zumindest einen Initiator aufweist und, falls erforderlich, zumindest einen grenzflächenaktiven Stoff. Der Initiator ist vorzugsweise eine monomere, oligomere oder polymere Säure oder ein mehrwertiges Metallsalz, wie bspw. CaCl₂ oder Ca(OH)₂.

Der grenzflächenaktive Stoff ist vorzugsweise ein monomeres, oligomeres oder polymeres Tensid oder ein Hydrokolloid. Damit sind auch Emulgatoren, Netzmittel und Dispergiermittel gemeint.

Gerade über den pKₛ-Wert der Beschichtung bzw. über den pKₛ-Wert des Initiators lässt sich das Fliesverhalten der Tinte, aufgebracht auf dem vorbehandelten Substrat und/oder auf der Beschichtung steuern, wenn in der Tinte Acrylate, wie bspw. Polyacrylate und/oder Polymethacrylate zugesetzt sind, deren Löslichkeit pH-Wertabhängig ist. Die saure Wirkung des Initiators kann zusätzlich zur Steuerung der Fliessfähigkeit der applizierten Tinte zur Auslösung einer nachfolgenden Härtung, insbesondere einer nachfolgenden thermischen Härtung dienen, unter der die applizierte Tinte vernetzt. Für die Vernetzungsreaktion haben sich Aminoharze zusammen mit Cobindemitteln, auch niedermolekularen Cobindemitteln bewährt.

Auf diese Weise ist eine exakte Steuerung des VerlaufVerhaltens der Tinte möglich. Unter dem Einfluss der Säure dickt die aufgebrachte Tinte sofort ein.

Hierdurch lässt sich entsprechend des pKₛ-Wertes des Initiators Einfluss nehmen auf das Fliesverhalten der aufgebrachten Tinte und die Härtung des sich ausbildenden Filmes.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: eine schematisch dargestellte Seitenansicht auf ein Substrat und/oder Trägermaterial, beschichtet mit einer erfindungsgemässen- Vorbeschichtung, welches mittels Tintendruck oder Tintenstrahldruck bedruckt wird;
- Fig. 2: eine schematisch dargestellte Seitenansicht auf eine Vorbehandlung eines Substrates und/oder Trägermaterials, versehen mit einer erfindungsgemässen Beschichtung auf welches mittels Tintendruck oder Tintenstrahldruck gedruckt wird, als weiteres Ausführungsbeispiel.

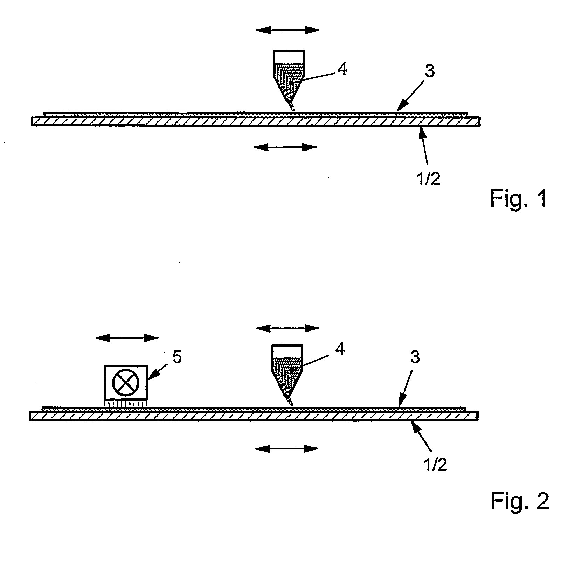

Gemäss Figur 1 weist ein Substrat 1 und/oder Trägermaterial 2 bei der vorliegenden Erfindung eine erfindungsgemässe Beschichtung 3 auf, die mit dem Substrat 1 bzw. Trägermaterial 2 in beliebigen Beschichtungsverfahren aufgebracht werden kann.

Die erfindungsgemässe Beschichtung 3 dient der Einflussnahme auf das Fliessverhalten einer wasserbasierenden Tinte 4, aufgebracht mittels Tintendruck bzw. Tintentrahldruck und/oder deren Härtung.

Die Tinte 4 wird mittels herkömmlichen Verfahren, Tintendrucker, Tintenstrahldrucker auf die Beschichtung 3 bzw. auf das Substrat 1 und/oder Trägermaterial 2 aufgebracht.

Als Substrat 1 bzw. Trägermaterial 2 können beliebige nicht saugfähige Materialen, wie Kunststoffe, Metalle, Kompositwerkstoffe, Folien, Glas oder dgl. verwendet werden.

Ferner wird die Beschichtung 3 durch Beschichtungsverfahren, wie Tauchen, Walzen, Giessen, Fluten, Bedrucken als nicht zerstäubende Beschichtungsverfahren auf das Substrat 1 und/oder Trägermaterial 2 aufgetragen bzw. aufgebracht. Es sind jedoch auch andere Beschichtungsverfahren, wie Spritzbeschichtungsverfahren durch Spritzen, Sprühen von Flüssigbeschichtungen, Druckluftspritzen, Airless- oder Hochdruck-Spritzverfahren sowie elektrostatisches Sprühen oder Pulverbeschichtungsverfahren möglich, um die Beschichtung 3 mit dem Trägermaterial 2 zu verbinden.

Dabei soll im Rahmen der vorliegenden Erfindung liegen, dass die Tinte 4 des Tintenstrahldruck oder Tintendruck auf die Beschichtung 3 zeit- oder raumabhängig vor dem Aufbringen der Tinte 4 (inline) auf das Substrat 1 bzw. Trägermaterial 2 aufgebracht wird. Auch soll jedoch im Rahmen der vorliegenden Erfindung liegen, dass die Tinte 4 zeitlich unabhängig von dem Aufbringen der Beschichtung 3 auf das Substrat 1 bzw. Trägermaterial 2 aufgebracht wird, wobei ggf. mittels einer Temperiereinrichtung 5 die auf die Beschichtung 3 bzw. auf das Substrat 1 aufgebrachte Tinte 4 wärmebehandelt werden kann.

Als besonders vorteilhaft hat sich bei der vorliegenden Erfindung erwiesen, dass die Beschichtung 3 aus zumindest einem Initiator und zumindest einem grenzflächenaktiven Stoff hergestellt bzw. gebildet wird. Hierdurch soll im Sinne einer definierten Farbverteilung eine ausreichend schnelle Verminderung bzw. Reduktion der Fliessfähigkeit der auf Beschichtung 3 und/oder Substrat 1 bzw. Trägermaterial 2 aufgebrachten Tinte 4 erfolgen bzw. chemisch induziert werden. Dabei kann die Beschichtung 3, bestehend aus Initiator und grenzflächenaktiven Stoff ganz oder teilweise flüchtig ausgebildet sein oder in der aufgebrachten Druckfarbe löslich sein. Die Tinte 4 verbindet sich mit der auf dem Substrat 1 bzw. auf dem Trägermaterial 2 aufgebrachten Beschichtung 3.

Dabei hat sich als vorteilhaft erwiesen, als Bestandteil der Beschichtung 3 als grenzflächenaktiven Stoff ein monomeres, oligomeres oder polymeres Tensid, vorzugsweise Aniontenside, Kationtenside, Atnphotenside oder Miotenside zu verwenden. Als grenzflächenaktiver Stoff können auch Hydrokolloide verwendet werden. Dabei können die Tenside Emulgatoren, Netzmittel und Dispergiermittel sein. Die Hydrokolloide können ebenfalls Dispergiermittel sein.

Der wesentliche Bestandteil bei der vorliegende Beschichtung ist der Initiator, der als Säure, insbesondere als eine monomere, oligomere oder polymere Säure ausgebildet ist. Vorzugsweise wird als Initiator eine mono-oder polyfunktionelle Carbonsäure verwendet, die einen pKₛ-Wert von -6 bis 15 aufweist. Dabei bewirkt der vorzugsweise sauer gehaltene Initiator eine Herabsetzung der Löslichkeit zumindest einer Komponente der auf das Substrat 1 bzw. Trägermaterial 2, insbesondere auf die Beschichtung 3 aufgebrachten Tinte 4. Die Beschichtung 3 bzw. der saure Initiator kann zur Flockulierung einer polymeren Komponente oder einer farbgebenden Komponente oder zur Agglomerisierung von Pigmenten und damit zur Immobilisierung der auf das Substrat 1 aufgebrachten Tinte 4 führen.

Zudem kann der Initiator zumindest teilweise oder vollständig eine Polymerisation der auf die Beschichtung 3 bzw. auf das Substrat 1 und/oder Trägermaterial 2 aufgebrachten Tinte 4 auslösen.

Ferner hat sich als vorteilhaft bei der vorliegenden Erfindung erwiesen, dass eine Tinte 4 verwendet wird, welche neben den flüchtigen Bestandteilen eine zumindest teilweise polymerisierbare Zusammensetzung aufweist. Diese erfindungsgemässe Tinte 4 weist eine Zusammensetzung auf, die mit der Beschichtung eine optimierte Steuerung des Verlaufsverhaltens bzw. des Fliessverhaltens ermöglicht.

Durch den Initiator der Beschichtung 3 lässt sich ein Verlaufverhalten der Tinte 4 entsprechend steuern.

Hierzu hat sich als besonders vorteilhaft erwiesen, eine Tinte 4 zu verwenden, die als Bestandteil Acrylate, vorzugsweise Polyacrylate und/oder Polymethacrylate enthält. Dabei können die Acrylate, insbesondere Polyacrylate und/oder Polymethracrylate bis zu 15 Gew% als Bestandteil der wässrigen Tinte 4 enthalten sein. Grundsätzlich sind in diesem Zusammenhang alle solchen Polymere geeignet, deren Löslichkeit pH-Wert abhängig ist.

Zudem wirkt der saure Initiator als Bestandteil der Beschichtung 3 als Beschleuniger zur Aushärtung.

Dabei kann die Zusammensetzung wie folgt sein:

| | |
|---|---|
| - Lösungsmittel | 10-98 Gew% |
| - Aminoharz, insbesondere Melamin-Formaldehyd-Harze | 0,1-50 Gew% |
| - Cobindemittel, auch niedermolekulare Cobindemittel,wie bi-, tri-, oglio- oder polyfunktionelle Alkohole,inklusiv und/oder Glykole oder Glykolether | 0-25 Gew% |
| - Grenzflächenaktive Stoffe, wie monomere, oligomereoder polymere Tenside | 0-5 Gew% |
| - Biozide, wie Bakterizid oder Fungizide | 0-5 Gew% |
| - pH-Wort-Stabilisatoren | 0-5 Gew% |
| - Acrylate, insbesondere Polyacrylate und/oderPolymethacrylate von | 0-15 Gew% |
| - Dispergierhilfen von | 0-10 Gew% |
| - Feuchthaltemittel von | 0-20 Gew% |
| - Farbmittel, insbesondere Farbpigmente von | 1-10 Gew% |

Diese bevorzugte Zusammensetzung der Tinte 4 wirkt besonders vorteilhaft mit der Beschichtung resultierend aus der Vorbehandlung mit einer Lösung 3 folgender Zusammensetzung:

| | |
|---|---|
| - Lösungsmittel, Wasser und/oder Alkohol | 80-100 Gew% |
| - Initatoren, insbesondere anorganische und/oderorganische Säuren, wie bspw. monomere, oligomere oder polymere Säuren, insbesondere mono- oder polyfunktionelle Karbonsäuren | 1-50 Gew% |
| - grenzflächenaktive Stoffe, wie monomere, oligomere oder polymere Tenside, insbsondere Aniontenside, Kationtenside, Amphotenside oder Niotenside | 0-25 Gew% |

Durch den sauren Initiator wird das in der Tinte 4 enthaltene Aminoharz, insbesondere Melamin-Formaldehyd-Harz polymerisiert, wobei sich die Tinte 4, ggf. auch thermisch beschleunigt, mit der Beschichtung 3 und/oder mit den Substrat 1 und/oder Trägermaterial 2 verbindet, wobei ein Vedaufsverhalten steuerbar ist und eine Fliessfähigkeit der Tinte 4 schnell verminderbar ist. Dies führt dazu, dass sehr hoch beständige, hochhaftende, sehr widerstandsfähige und lichtechte Beschriftungen bzw. Bedruckungen von Tinten 4 auf beliebigen Substraten 1 bzw. Trägermaterialien 2, durch die Beschichtung 3, insbesondere Vorbeschichtung, ermöglicht werden.

### Bezugszeichenliste

- 1: Substrat
- 2: Trägermaterial
- 3: Vorbehandlungslösung und/oder Beschichtung
- 4: Tinte
- 5: Temperiereinrichtung

## Patentansprüche

1. Vorbehandlung und/oder Vorbeschichtung von nicht saugfähigen Substraten (1) und/oder nicht saugfähigen Trägermaterialien (2) für den Tintendruck, Tintenstrahldruck mit wasserbasierter Tinte (4) mit einer Vorbehandlungslösung (3) und/oder Beschichtung (3),
**dadurch gekennzeichnet, dass** mittels der Vorbehandlungslösung (3) und/oder Beschichtung (3) zumindest ein Initiator aufgebracht wird, der im Sinne einer definierten Farbverteilung eine ausreichend schnelle Verminderung der Fließfähigkeit zur Verhinderung eines Ineinanderlaufens der auf das Substrat (1) und/oder Trägermaterial (2) aufgebrachten Tinte (4) physikalisch oder chemisch durch die Reduzierung der Löslichkeit zumindest eines Tintenbestandteils induziert.

2. Vorbehandlung und/oder Vorbeschichtung nach Anspruch 1, **dadurch gekennzeichnet, dass** die Vorbehandlungslösung (3) und/oder Beschichtung (3), bestehend aus zumindest einem Initiator über nicht zerstäubende Beschichtungsverfahren wie Tauchen, Walzen, Gießen, Fluten, Bedrucken, in Spritzbeschichtungsverfahren wie Spritzen oder Sprühen von Flüssigbeschichtungen, Druckluftspritzen, Airless- oder Hochdruckspritzen, elektrostatisches Sprühen oder im Pulverbeschichtungsverfahren, auf die Oberfläche eines Substrates (1) und/oder Trägermaterials (2) aufgebracht wird.

3. Vorbehandlung und/oder Vorbeschichtung nach Anspruch 1 oder 2, **dadurch gekennzeichnet, dass** die Vorbehandlungslösung (3) und/oder Beschichtung (3), bestehend aus zumindest einem Initiator, zeit- oder raumabhängig vor dem Aufbringen der Tinte (4) auf das Substrat (1) oder Trägermaterial (2) aufgebracht wird.

4. Vorbehandlung und/oder Vorbeschichtung nach wenigstens einem der Ansprüche 1 bis 3, **dadurch gekennzeichnet, dass** die Vorbehandlungslösung (3) und/oder Beschichtung (3), bestehend aus zumindest einem Initiator, zeitlich unabhängig vor dem Aufbringen der Tinte (4) auf das Substrat (1) oder Trägermaterial (2) aufgebracht wird.

5. Vorbehandlung und/oder Vorbeschichtung nach wenigstens einem der Ansprüche 1 bis 4, **dadurch gekennzeichnet, dass** die auf das beschichtete Substrat (1) bzw. Trägermaterial (2) aufgebrachte Tinte (4) sich mit dem Substrat (1) und insbesondere mit der Beschichtung (3), bestehend aus zumindest einem Initiator, verbindet, wobei die Beschichtung (3) in der aufgebrachten Tinte (4) löslich ist.

6. Vorbehandlung und/oder Vorbeschichtung nach wenigstens einem der Ansprüche 1 bis 5, **dadurch gekennzeichnet, dass** die Beschichtung (3) ganz oder teilweise flüchtig ist.

7. Vorbehandlung und/oder Vorbeschichtung nach wenigstens einem der Ansprüche 1 bis 6, **dadurch gekennzeichnet, dass** die Beschichtung (3) einen grenzflächenaktiven Stoff aufweist, der ein monomeres, oligomeres oder polymeres Tensid, oder ein Hydrokolloid ist, wobei
als grenzflächenaktiver Stoff vorzugsweise Aniontenside, Kationtenside, Amphotenside oder Niotenside verwendet werden und/oder wobei als Tensid vorzugsweise Emulgatoren, Netzmittel und Dispergiermittel verwendet werden.

8. Vorbehandlung und/oder Vorbeschichtung nach wenigstens einem der Ansprüche 1 bis 7, **dadurch gekennzeichnet, dass** als Initiator ein mehrwertiges Metallsalz, wie beispielsweise CaC1₂ oder Ca(OH)₂ verwendet wird.

9. Vorbehandlung und/oder Vorbeschichtung nach wenigstens einem der Ansprüche 1 bis 7, **dadurch gekennzeichnet, dass** als Initiator der Vorbehandlungslösung (3) und/oder Beschichtung (3) eine monomere, oligomere oder polymere Säure verwendet wird, wobei
der Initiator einen pKₛ-Wert vorzugsweise im Bereich von -6 bis 15 aufweist, und/oder
dass als Initiator vorzugsweise eine mono- oder polyfunktionelle Carbonsäure verwendet wird.

10. Vorbehandlung und/oder Vorbeschichtung nach wenigstens einem der Ansprüche 1 bis 9, **dadurch gekennzeichnet, dass** die Beschichtung (3) die Löslichkeit zumindest einer vorzugsweise polymeren Komponente oder einer der farbgebenden Komponenten der applizierten Tinte (4) herabsetzt.

11. Vorbehandlung und/oder Vorbeschichtung nach wenigstens einem der Ansprüche 1 bis 10, **dadurch gekennzeichnet, dass** die Beschichtung (3) zur Zusammenlagerung einer Komponente oder mehrerer Komponenten wie beispielsweise zur Flockulierung oder Agglomerisierung zumindest einer polymeren Komponente oder einer Pigmentkomponente der auf das Substrat (1) oder das Trägermaterial (2) aufgebrachten Tinte (4) führt.

12. Vorbehandlung und/oder Vorbeschichtung nach wenigstens einem der Ansprüche 1 bis 11, **dadurch gekennzeichnet, dass** die Beschichtung (3) eine teilweise oder vollständige Polymerisation der auf das Substrat (1) oder Trägermaterial (2) aufgebrachten Tinte (4) induziert.

13. Vorbehandlung und/oder Vorbeschichtung nach wenigstens einem der Ansprüche 1 bis 12, **dadurch gekennzeichnet, dass** die Beschichtung (3) eine teilweise oder vollständige Polymerisation der auf das Substrat (1) und/oder Trägermaterial (2) aufgebrachten Tinte (4) induziert, wobei die Polymerisation der auf die Beschichtung (3) des Substrates aufgebrachten Tinte (4) ohne oder mit thermischer Beschleunigung erfolgt, wobei
die Beschichtung (3) eine teilweise oder vollständige Polykondensation der auf das Substrat (1) und/oder Trägermaterial (2) aufgebrachten Tinte (4) induzieren kann.

## Claims

1. Pretreatment and/or precoating with a pretreatment solution (3) and/or coating (3) of non-absorbent substrates (1) and/or non-absorbent support materials (2) for ink printing, inkjet printing with water-based ink (4),
**characterised in that**, by means of the pretreatment solution (3) and/or coating (3), there is applied at least one initiator which, for the purpose of a defined colour distribution, physically or chemically induces a sufficiently rapid reduction in the flowability by reducing the solubility of at least one ink component, in order to prevent the ink (4) applied to the substrate (1) and/or support material (2) from running.

2. Pretreatment and/or precoating according to claim 1, **characterised in that** the pretreatment solution (3) and/or coating (3), comprising at least one initiator, is applied to the surface of a substrate (1) and/or support material (2) by non-atomising coating methods such as dipping, roller-coating, casting, flooding, printing, by spray coating methods such as the spraying or atomisation of liquid coatings, compressed-air spraying, airless or high-pressure spraying, electrostatic spraying, or by powder coating methods.

3. Pretreatment and/or precoating according to claim 1 or 2, **characterised in that** the pretreatment solution (3) and/or coating (3), comprising at least one initiator, is applied to the substrate (1) or support material (2) in a time- or space-dependent manner prior to application of the ink (4).

4. Pretreatment and/or precoating according to at least one of claims 1 to 3, **characterised in that** the pretreatment solution (3) and/or coating (3), comprising at least one initiator, is applied to the substrate (1) or support material (2) in a time-independent manner prior to application of the ink (4).

5. Pretreatment and/or precoating according to at least one of claims 1 to 4, **characterised in that** the ink (4) applied to the coated substrate (1) or support material (2) binds to the substrate (1) and in particular to the coating (3), comprising at least one initiator, the coating (3) being soluble in the applied ink (4).

6. Pretreatment and/or precoating according to at least one of claims 1 to 5, **characterised in that** the coating (3) is wholly or partly volatile.

7. Pretreatment and/or precoating according to at least one of claims 1 to 6, **characterised in that** the coating (3) comprises a surface-active substance which is a monomeric, oligomeric or polymeric surfactant or a hydrocolloid, wherein
there are used as the surface-active substance preferably anionic surfactants, cationic surfactants, ampho-surfactants or non-ionic sufactants and/or wherein there are used as the surfactant preferably emulsifiers, wetting agents and dispersing agents.

8. Pretreatment and/or precoating according to at least one of claims 1 to 7, **characterised in that** there is used as the initiator a polyvalent metal salt, such as, for example, CaCl₂ or Ca(OH)₂.

9. Pretreatment and/or precoating according to at least one of claims 1 to 7, **characterised in that** there is used as the initiator of the pretreatment solution (3) and/or coating (3) a monomeric, oligomeric or polymeric acid, wherein
the initiator has a pKₛ value preferably in the range of from -6 to 15, and/or there is used as the initiator preferably a mono- or poly-functional carboxylic acid.

10. Pretreatment and/or precoating according to at least one of claims 1 to 9, **characterised in that** the coating (3) reduces the solubility of at least one preferably polymeric component or one of the colour-giving components of the applied ink (4).

11. Pretreatment and/or precoating according to at least one of claims 1 to 10, **characterised in that** the coating (3) leads to the coming together of one component or of a plurality of components such as, for example, to the flocculation or agglomeration of at least a polymeric component or a pigment component of the ink (4) applied to the substrate (1) or support material (2).

12. Pretreatment and/or precoating according to at least one of claims 1 to 11, **characterised in that** the coating (3) induces partial or complete polymerisation of the ink (4) applied to the substrate (1) or support material (2).

13. Pretreatment and/or precoating according to at least one of claims 1 to 12, **characterised in that** the coating (3) induces partial or complete polymerisation of the ink (4) applied to the substrate (1) and/or support material (2), the polymerisation of the ink (4) applied to the coating (3) of the substrate taking place without or with thermal acceleration, wherein
the coating (3) is able to induce partial or complete polycondensation of the ink (4) applied to the substrate (1) and/or support material (2).

## Revendications

1. Prétraitement et/ou pré-couchage de substrats absorbants (1) et/ou de matériaux supports non absorbants (2) pour l'impression d'encre, l'impression au jet d'encre avec une encre à base aqueuse (4), avec une solution de prétraitement (3) et/ou un couchage (3), **caractérisé en ce que**, à l'aide de la solution de prétraitement (3) et/ou du couchage (3) on applique au moins un amorceur, qui dans le sens d'une répartition définie de l'encre occasionne par voie physique ou chimique par réduction de la solubilité d'au moins un constituant de l'encre une diminution suffisamment rapide de la fluidité dans le but d'empêcher un mélange avec l'encre (4) appliquée sur le substrat (1) et/ou sur le matériau support (2).

2. Prétraitement et/ou pré-couchage selon la revendication 1, **caractérisé en ce que** la solution de prétraitement (3) et/ou le couchage (3), constitué d'au moins un amorceur, est appliqué sur la surface d'un substrat (1) et/ou d'un matériau support (2) par des procédés de revêtement sans pulvérisation, tels que l'application au trempé, au rouleau, par coulée, par arrosage, par impression, par le procédé de revêtement par pistolage, notamment le pistolage ou la pulvérisation de revêtements liquides, par pistolage à l'air comprimé, par pistolage sans air ou sous haute pression, par pulvérisation électrostatique ou par le procédé d'application de poudres.

3. Prétraitement et/ou pré-couchage selon la revendication 1 ou 2, **caractérisé en ce que** la solution de prétraitement (3) et/ou le couchage (3), constitué d'au moins un amorceur, est appliqué sur le substrat (1) ou le matériau support (2) avant application de l'encre (4), d'une manière dépendant du temps ou de l'espace.

4. Prétraitement et/ou pré-couchage selon au moins l'une des revendications 1 à 3, **caractérisé en ce que** la solution de prétraitement (3) et/ou le couchage (3), constitué d'au moins un amorceur, est appliqué sur le substrat (1) ou le matériau support (2) avant application de l'encre (4) d'une manière indépendante du temps.

5. Prétraitement et/ou pré-couchage selon au moins l'une des revendications 1 à 4, **caractérisé en ce que** l'encre (4) appliquée sur le substrat (1) ou le matériau support (2) revêtu se lie au substrat (1) et en particulier au couchage (3), constitué d'au moins un amorceur, le couchage (3) étant soluble dans l'encre appliquée (4).

6. Prétraitement et/ou pré-couchage selon au moins l'une des revendications 1 à 5, **caractérisé en ce que** le couchage (3) est en totalité ou en partie volatil.

7. Prétraitement et/ou pré-couchage selon au moins l'une des revendications 1 à 6, **caractérisé en ce que** le couchage (3) comprend une substance tensioactive, qui est un tensioactif monomère, oligomère ou polymère, ou un hydrocolloide, auquel cas on utilise en tant que substance tensioactive de préférence des tensioactifs anioniques, des tensioactifs cationiques, des tensioactifs amphotères ou des tensioactifs non ioniques, et/ou on utilise en tant que tensioactif de préférence des émulsifiants, des mouillants et des dispersants.

8. Prétraitement et/ou pré-couchage selon au moins l'une des revendications 1 à 7, **caractérisé en ce qu'**on utilise en tant qu'amorceur un sel d'un métal polyvalent, tel que par exemple CaCl₂ ou Ca(OH)₂.

9. Prétraitement et/ou pré-couchage selon au moins l'une des revendications 1 à 7, **caractérisé en ce qu'**on utilise en tant qu'amorceur de la solution de prétraitement (3) et/ou du couchage (3) un acide monomère, oligomère ou polymère, l'amorceur présentant un pKₛ de préférence compris dans la plage de -6 à 15, et/ou l'amorceur utilisé étant de préférence un acide mono- ou polycarboxylique.

10. Prétraitement et/ou pré-couchage selon au moins l'une des revendications 1 à 9, **caractérisé en ce que** le couchage (3) abaisse la solubilité d'au moins un composant de préférence polymère ou d'un composant chromogène de l'encre appliquée (4).

11. Prétraitement et/ou pré-couchage selon au moins l'une des revendications 1 à 10, **caractérisé en ce que** le couchage (3) conduit à la condensation d'un composant ou de plusieurs composants, notamment par exemple à la floculation ou à l'agglomération d'au moins un composant polymère ou d'un composant pigmentaire de l'encre (4) appliquée sur le substrat (1) ou le matériau support (2).

12. Prétraitement et/ou pré-couchage selon au moins l'une des revendications 1 à 11, **caractérisé en ce que** le couchage (3) induit une polymérisation partielle ou complète de l'encre (4) appliquée sur le substrat (1) ou le matériau support (2).

13. Prétraitement et/ou pré-couchage selon au moins l'une des revendications 1 à 12, **caractérisé en ce que** le couchage (3) induit une polymérisation partielle ou complète de l'encre (4) appliquée sur le substrat (1) et/ou le matériau support (2), la polymérisation de l'encre (4) appliquée sur le couchage (3) du substrat s'effectuant sans ou avec accélération thermique, le couchage (3) pouvant induire une polycondensation partielle ou complète de l'encre (4) appliquée sur le substrat (1) et/ou le matériau support (2).
